(19) Europäisches Patentamt
European Patent Office
Office européen des brevets

(11) Publication number: 0 440 293 A1

(12) **EUROPEAN PATENT APPLICATION**

(21) Application number: 91200152.6

(22) Date of filing: 25.01.91

(51) Int. Cl.[5]: C08K 3/24, C08K 5/09, C08L 73/00, //(C08L73/00,33:02)

(30) Priority: 05.02.90 US 474919
29.01.90 US 471466
29.01.90 US 471465

(43) Date of publication of application: 07.08.91 Bulletin 91/32

(84) Designated Contracting States: BE DE FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Smutny, Edgar Josef
1828 Milford Street
Houston, Texas 77098(US)
Inventor: Slaugh, Lynn Henry
12518 Texas Army Trail
Cypress, Texas 77429(US)

(54) **Polymer compositions.**

(57) Provided are melt-stabilized polymer compositions comprising a linear alternating polymer of carbon monoxide and at least one ethylenically unsaturated compound, and a stabilizing quantity of at least a zinc compound, selected from the group of zinc compounds, consisting of:

a) a zinc aluminate, and optionally an acidic polymer containing moieties of an α-olefin and an α,β-ethylenically unsaturated carboxylic acid,

b) the reaction product of an oxy-bridged zinc-aluminium or zinc-titanium compound and an acidic polymer containing moieties of an α-olefin and an α,β-ethylenically unsaturated carboxylic acid, and

c) a partially zinc-neutralized acidic polymer containing moieties of an α-olefin and an α,β-ethylenically unsaturated carboxylic acid and salt of aluminium, magnesium or scandium.

EP 0 440 293 A1

# POLYMER COMPOSITIONS

This invention relates to stabilized compositions comprising linear alternating polymers of carbon monoxide and at least one ethylenically unsaturated compound. More particularly, the present invention comprises compositions of said linear alternating polymers having improved melt stability.

Linear alternating polymers of carbon monoxide and at least one ethylenically unsaturated compound are known, and the preparation of said polymers, also known as polyketones or polyketone polymers, has been described in e.g.: European Patent Applications EP-121965, 181014, 213671 and 257663.

The resulting materials are relatively high molecular weight thermoplastic polymers having established utility as premium thermoplastics in the production of shaped articles such as containers for food and drink by procedures which are conventionally employed with thermoplastics.

It is known that the addition of other materials, both organic and inorganic, may serve to modify the properties of the polyketone polymers. The formation of polyketone blends, for example, seeks to maintain the more desirable properties of the polyketone polymers while improving other properties. Addition of other materials may serve to increase the stability of the polyketone polymer. Stabilization of the polyketones against undue loss of crystallinity upon melting and solidification is possible by the addition of aluminium stearate or certain aluminium phenoxides. The presence of aluminium hydrogels in polyketone polymers is shown in European patent application No. 326224. Blends of the polyketone polymers and certain acidic polymers are disclosed in U.S. patent specification No. 4874819, and blends of the linear alternating polymers with this acidic polymer which has been partially neutralized with zinc or aluminium are the subject of European patent application No. 393753. It would be of advantage to provide additional compositions of the linear alternating polymers and metal compounds which have desirable properties somewhat different from those of the polyketone polymers.

The problem underlying the present invention is providing further compositions of the linear alternating polymers which exhibit improved melt stability, as described hereinbefore.

As a result of extensive research and experimentation it proved possible to develop novel linear alternating polymer compositions which exhibit improved melt stability by incorporating therein at least a selected zinc compound.

The invention provides therefore a stabilized polymer composition comprising a linear alternating polymer of carbon monoxide and at least one ethylenically unsaturated compound, and a stabilizing quantity of at least a zinc compound, selected from the group of zinc compounds, consisting of:

a) a zinc aluminate, and optionally an acidic polymer containing moieties of an α-olefin and an α,β-ethylenically unsaturated carboxylic acid,

b) the reaction product of an oxy-bridged zinc-aluminium or zinc-titanium compound and an acidic polymer containing moieties of an α-olefin and an α,β-ethylenically unsaturated carboxylic acid, and

c) a partially zinc-neutralized acidic polymer containing moieties of an α-olefin and an α,β-ethylenically unsaturated carboxylic acid and salt of aluminium, magnesium or scandium.

The polymers which are stabilized against undue degradation in molten form are linear alternating polymers of carbon monoxide and at least one ethylenically unsaturated compound, suitably hydrocarbon. The ethylenically unsaturated hydrocarbons which are useful as precursors of the linear alternating polymers have up to 20 carbon atoms inclusive, preferably up to 10 carbon atoms inclusive, and are aliphatic including ethene and other α-olefins such as propene, 1-butene, isobutene, 1-hexene, 1-octene and 1-dodecene, or are arylaliphatic having an aryl substituent on an otherwise aliphatic molecule, particularly an aryl substituent on a carbon atom of the ethylenic unsaturation, such as for example styrene, p-methylstyrene, p-ethylstyrene and m-methylstyrene. The preferred polyketone polymers are copolymers of carbon monoxide and ethene or terpolymers of carbon monoxide, ethene and a second ethylenically unsaturated hydrocarbon of at least 3 carbon atoms, particularly an α-olefin such as propene.

When the preferred terpolymers are employed in the compositions of the invention, there will be within the terpolymer at least about 2 units incorporating a moiety of ethene for each unit incorporating a moiety of the second hydrocarbon. Preferably, there will be from 10 units to 100 units incorporating a moiety of ethene for each unit incorporating a moiety of the second hydrocarbon. The polymer chain of the preferred polymers is therefore represented by the repeating formula

$$-[CO-(-CH_2-CH_2-)-]_x-[CO-(-G-)-]_y- \qquad (I)$$

wherein G is the moiety of the second ethylenically unsaturated hydrocarbon of at least 3 carbon atoms

polymerized through the ethylenic unsaturation and the ratio of y:x is no more than 0.5. The $-CO{\leftarrow}CH_2CH_2{\rightarrow}$ units and the $-CO{\leftarrow}G{\rightarrow}$ units are found randomly throughout the polymer chain and preferred ratios of y:x will be in the range of from 0.01 to 0.1.

Of particular interest are the polymers of the above formula having a number average molecular weight of from 1000 to 200,000, especially those polymers having a number average molecular weight from 20,000 to 90,000, as determined by gel permeation chromatography. The physical properties of the polymers are not only related to the molecular weight, but also to the polymer composition, i.e. whether the polymer is a copolymer or a terpolymer and, in the case of a terpolymer, to the nature and the proportion of the second hydrocarbon present. Typical melting points for such polymers are from 175°C to 300°C, more often from 210°C to 270°C. Typically the polymers will have a limiting viscosity number (LVN), measured in a standard capillary viscosity measuring device in m-cresol at 60°C, in the range of from 0.4 dl/g to 10 dl/g, preferably from 0.8 dl/g to 4 dl/g.

The polymers may be produced by the methods described in e.g. the European Patent Applications mentioned hereinbefore.

The zinc aluminate useful as stabilizer in the compositions of the invention, may be a dried or a calcined compound, suitably having an atomic Al/Zn ratio in the range of from 0.5 to 9. Ratios below about 0.5 give inferior results as do ratios substantially above 9. Zinc aluminates wherein the atomic ratio of aluminium to zinc is in the range of from 2 to 5 are preferred.

The zinc aluminate is provided to the polyketone compositions in a stabilizing quantity. Suitable quantities of zinc aluminate are in the range of from 0.01% by weight to 5% by weight, based on total composition. Concentrations of zinc aluminate in the range of from 0.05% by weight to 2% by weight on the same basis are preferred.

It is useful on occasion to provide to the polyketone composition, in addition to the zinc aluminate, a stabilizing quantity of an acidic polymer containing moieties of an $\alpha$-olefin and an $\alpha,\beta$-ethylenically unsaturated carboxylic acid. The $\alpha$-olefin component of this optional stabilizer is an $\alpha$-olefin of up to 10 carbon atoms such as ethene, propene, 1-butene, isobutene, 1-octene and 1-decene. Preferred $\alpha$-olefins are straight-chain $\alpha$-olefins of up to 4 carbon atoms inclusive, especially ethene or propene. Particularly preferred as the $\alpha$-olefin component of the acidic polymer is ethene. This $\alpha$-olefin component will be present in at least 75% by mole based on the total acidic polymer and preferably is present in at least 85% by mole on the same basis.

The $\alpha,\beta$-ethylenically unsaturated carboxylic acid component of the acidic polymer is an unsaturated carboxylic acid of up to 10 carbon atoms inclusive, such as acrylic acid, methacrylic acid, 2-hexenoic acid, 2-octenoic acid and 2-decenoic acid. The preferred $\alpha,\beta$-ethylenically unsaturated carboxylic acids have up to 4 carbon atoms inclusive. These are acrylic acid, methacrylic acid and crotonic acid, of which acrylic acid is preferred. The content of the unsaturated acid in the acidic polymer is in the range of from 1% by mole to 25% by mole based on total acidic polymer. Amounts of unsaturated carboxylic acid in the range of from 1% by mole to 15% by mole on the same basis are preferred.

The acidic polymer is suitably a copolymer of the $\alpha$-olefin and the $\alpha,\beta$-unsaturated carboxylic acid and in general such copolymers are preferred. On occasion, however, it is useful to include within the acidic polymer an optional quantity of a third monomer, particularly a non-acidic, low molecular weight polymerizable monomer of up to 8 carbon atoms inclusive. Such an optional third monomer of the acidic polymer may be an additional $\alpha$-olefin such as styrene or propene when the principal olefinic component is ethene, an unsaturated ester such as vinyl acetate, methyl methacrylate or butyl acrylate, an unsaturated halohydrocarbon such as vinyl chloride or vinyl fluoride or an unsaturated nitrile such as acrylonitrile. As previously stated, the presence of a third monomer within the acidic polymer is not required. When a third monomer is present, however, amounts of the third monomer up to 5% by mole based on total acidic polymer are satisfactory with amounts up to 3% by mole on the same basis being preferred.

When the acidic polymer is present in the zinc aluminate-stabilized compositions, the precise amount thereof is not critical and may conveniently be an amount of up to 5% by weight, based on total composition, with amounts in the range of from 0.05% by weight to 3% by weight on the same basis being preferred.

Suitable polymers of ethene and methacrylic acid and polymers of ethene and acrylic acid are obtainable commercially.

Another suitable type of zinc compound for use in the stabilized polymer compositions of the present invention is the reaction product of an oxy-bridged compound of certain metals and an acidic polymer containing moieties of an $\alpha$-olefin and an $\alpha,\beta$-ethylenically unsaturated carboxylic acid. The oxy-bridged compound used herein is a member of the class of $\mu$-oxoalkoxide compounds Known as Teyssie compounds. Such compounds are of interest because of a stoichiometrically specific ratio of metal atoms.

The compounds have the general structure $(RO)_n$-M-O-M'-O-M$(OR)_n$ ,where M' may be any divalent metal (e.g. Cr, Mn, Fe, Co, Zn, Mo), M is either Al(III) or Ti(IV), each R is usually an alkyl group, and n is either 2 or 3, depending upon whether M is threevalent (Al) or fourvalent (Ti), respectively. In the compounds suitable for the present invention, M' is zinc, and M is preferably aluminium. The preferred oxy-bridged compounds of zinc and aluminium have two aluminium atoms for each atom of zinc and are represented by the formula

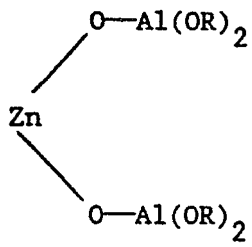

(II)

wherein R independently is alkyl of up to 10 carbon atoms inclusive, but preferably is lower alkyl of up to 4 carbon atoms inclusive. The production of such compounds is by known methods. See generally Teyssie et al., Chemtech (March 1977) pages 192-194.

To form the precursor of the compositions of type (b) of the invention the oxy-bridged compound of aluminium or titanium and zinc is reacted with an acidic polymer containing moieties of an $\alpha$-olefin and an $\alpha,\beta$-ethylenically unsaturated hydrocarbon, which acidic polymers have been described hereinbefore.

Without wishing to be bound by any particular theory, it appears probable that the zinc-aluminium or titanium compound serves to partially neutralize a portion of the carboxylic acid groups of the acidic polymer with zinc and aluminium or titanium. By employing a zinc-aluminium or zinc-titanium compound of specific stoichiometric proportions, it is considered likely that the neutralization of acidic sites also occurs in the stoichiometrically specific ratio of the oxy-bridged compound employed. In one modification of the invention the acidic polymer and the oxy-bridged compound are reacted in the presence of the polyketone polymer by mixing the materials together and applying heat. In a preferred modification, however, the acidic polymer and the oxy-bridged compound are reacted separately and the reaction product is provided to the linear alternating polymer. In this modification, the oxy-bridged compound and the acidic polymer are heated under reflux in toluene and the isopropyl alcohol (IPA) is removed by distillation. The suitable ratios of oxy-bridged compound to acidic polymer to be used in the reaction are in the range of from 10% by weight to 80% by weight of oxy-bridged compound based on total reaction mixture. Quantities of oxy-bridged compound in the range of from 10% by weight to 30% by weight based on total reaction mixture are preferred.

The linear alternating polymer is stabilized by the inclusion therein of a stabilizing quantity of the reaction product of the oxy-bridged compound and the acidic polymer. Quantities of reaction product in the range of from 0.05% by weight to 10% by weight based on total composition are satisfactory, quantities from 0.1% by weight to 3% by weight being preferred.

The third type of zinc compound for use in the stabilized polymer compositions of the present invention is a partially zinc-neutralized acidic polymer containing moieties of an $\alpha$-olefin and an $\alpha,\beta$-ethylenically unsaturated carboxylic acid, in combination with a salt of aluminium, magnesium or scandium. The acidic polymers on which the partially neutralized polymers are based, are of the type of acidic polymers as have been discussed hereinbefore. By the term partially zinc-neutralized is meant that some but not all of the carboxylic acid moieties have been neutralized with zinc as discussed hereinafter. Because the partially neutralized material retains ionic character while being polymeric in form, the partial zinc salt is often referred to as a zinc ionomer. Generally the amount of ionizable zinc present in the partially neutralized acid polymer is sufficient to neutralize from 5% to 80% of the carboxylic acid groups present in said acidic polymer.

The partially zinc-neutralized ionomers are known materials and methods for the production of the zinc ionomers are also well known. Certain of these zinc ionomers are commercially available.

The partially zinc-neutralized acidic polymer is provided to the compositions of the invention in a minor quantity. Amounts of the zinc ionomer from 0.05% by weight to 5% by weight, based on the total composition are satisfactory. Quantities of zinc ionomer from 0.1% by weight to 3% by weight on the same basis are preferred.

As mentioned hereinbefore the partially zinc-neutralized acidic polymer is present in the stabilized polymer composition together with a salt of aluminium, magnesium or scandium.

Although a variety of salts of these metals are satisfactory, the preferred metal salts are carboxylates. Salts of aromatic carboxylic acids such as benzoic acid, naphthalenecarboxylic acid and p-methylbenzoic acid are useful as components of the compositions of the invention, but the preferred salts are salts of alkanoic acids of up to 10 carbon atoms inclusive such as acetic acid, propionic acid, hexanoic acid or octanoic acid. The salts are completely neutralized salts, i.e., salts in which each valence of the aluminium, magnesium or scandium is combined with a carboxylate anion, or are basic salts in which at least one hydroxyl group is associated with the metal. In the case of salts of magnesium and scandium the completely neutralized salts are preferred whereas in the case of aluminium the basic aluminium carboxylates give better results. Examples of metal salts useful in the compositions of the invention include magnesium propionate, magnesium benzoate, aluminium acetate , basic aluminium acetate, dibasic aluminium acetate, aluminium octanoate, scandium acetate and scandium hexanoate.

The amount of metal salt to be employed together with the partially zinc-neutralized acidic polymer is not critical, the metal salt being typically employed in a molar amount which is at least equal to that of the zinc present in the partially zinc-neutralized acidic polymer. Molar ratios of metal carboxylate to zinc in the range of from 1:1 to 10:1 are satisfactory although ratios in the range of from 2:1 to 5:1 are preferred.

The method of producing the stabilized polymer compositions of the present invention is not critical as long as an intimate mixture of the different components is obtained. In one modification, the components in a finely divided form are dry-blended and co-melted. In an alternate modification a mixture of the components is passed through an extruder to produce the intimate mixture as an extrudate. In yet another modification the composition is produced in a mixing device or blender operating at a high shear. The compositions may also contain other additives such as colorants, plasticizers, fibers, reinforcements and mould release agents which are added to the polyketone polymer together with or separately from the other components of the composition.

The compositions of the invention will have an improved melt stability as evidenced by a relatively constant apparent crystallinity when subjected to melt processing operations of melting and solidification. This improvement in retained apparent crystallinity offers considerable advantages which are not to be found when unstabilized polymers are utilized. For example, in a typical processing scheme, the stabilized composition is converted into nibs by passage through an extruder. The nibs are then often injection moulded to produce a shaped article. Each of these operations involves a melting/solidification cycle which is accomplished without substantial decrease in crystallinity as determined by a relatively constant melting point or other related physical properties. The compositions of the invention are therefore particularly useful in applications involving a series of melting and solidification cycles. While the compositions of the invention are processed into useful articles by conventional techniques which do not involve melting and solidification of the polymer, the advantages of the compositions of the invention are most apparent when melt-processing operations which do involve the melting and solidification of the polyketone polymer are employed.

Thus, the compositions are useful as premium thermoplastics as is known in the art for the polyketone polymer. The compositions are particularly useful in the production of shaped articles by a series of melting and solidification cycles, which articles are likely to be subjected to conditions requiring a relatively high degree of crystallinity. Illustrative of such articles are containers for food and drink and parts and housings for automotive applications.

The invention is further illustrated by the following Examples, which should however not be regarded as limiting the scope of the invention, and for which the following information is provided.

Polyketone polymer I: Carbon monoxide-ethene-propene terpolymer having a melting point of 223 °C and a limiting viscosity number (LVN), measured in m-cresol at 60 °C, of 1.81 dl/g.

Polyketone polymer II: as polymer I, but having a melting point of 218 °C and a LVN of 1.84 dl/g.

Zinc aluminates

A number of zinc aluminates were produced by adding an aqueous solution of commercial grade aluminium and zinc nitrates to an aqueous solution of ammonia buffered to a pH of 9.8 with ammonium nitrate. The resulting precipitate was recovered by filtration, dried at approximately 120 °C for 24 hours and calcined at 500 °C for 2 hours. By varying the concentrations of aluminium nitrate and zinc nitrate in the solution from which the precipitate was formed, zinc aluminates having aluminium:zinc atomic ratios of from about 0.6 to about 5.1 were produced. The procedure was varied on some occasions by employing ammonium carbonate or sodium hydroxide in the precipitating solution in place of the ammonium nitrate or ammonia. Some of the zinc aluminates were only dried according to the above procedure, but not calcined. This is indicated in Table I with the letters C and D, respectively.

Oxy-bridged zinc-aluminium compound

The oxy-bridged compound zinc oxodi(isopropyloxo)aluminate was prepared by adding the following compounds to a two-liter flask.
$Zn(OAc)_2$ - 20 grams
$Al(isopropoxide)_3$ (anhydrous) - 44.5 grams
Decalin (anhydrous and $N_2$ capped) - 1 liter
The ingredients were then heated under reflux conditions to 200 °C and isopropyl alcohol was removed by distillation. The oxy-bridged compound (48.2 grams) was recovered, dissolved in hot toluene and passed through a filter. The amount oxy-bridged of compound finally recovered was 44.66 grams.

Reaction product of oxy-bridged zinc-aluminium compound and acidic polymer

The oxy-bridged zinc-aluminium compound as prepared hereinbefore, was reacted with NUCREL 535 (trademark), a commercially available copolymer of ethene and acrylic acid, by dissolving the two compounds in toluene, and heating the mixture under reflux conditions, cooling to room temperature and recovering the solid by filtration. The resulting reaction products had the following characteristics.
Product E: 4:1 wt ratio of acidic copolymer:oxy-bridged compound, and a degree of neutralization of 20%.
Product F: 8:1 wt ratio of acidic copolymer:oxy-bridged compound, and a degree of neutralization of 10%.

Example I

Preparation of zinc aluminate-stabilized polyketone composition

The compositions were prepared by cryogrinding Polyketone I (as nibs) to a finely divided state, followed by blending with a zinc aluminate of general formula $ZnO.Al(OH)_3$ (A) or of general formula $ZnO.Al_2O_3$ (B) in an amount sufficient to arrive at the compositions as described in Table 1. The mixture was tumbled overnight in nitrogen and subsequently extruded through an extruder operating at 275 °C in an atmosphere of air.

Example II

Preparation of polyketone compositions stabilized with the reaction product of the oxy-bridged zinc-aluminium compound and the acidic polymer

Employing Polyketone I and the reaction products E or F, two stabilized compositions were prepared following the procedure of Example I. Composition G comprised Polyketone I and 3% by weight of reaction product E and composition H comprised 0.3% by weight of reaction product F.

Example III

Preparation of polyketone compositions stabilized with the partially neutralized acidic polymer and an aluminium, magnesium or scandium salt

Compositions were produced by dry mixing polyketone II and 0.3% by weight, based on total composition of a mixture of a partially neutralized zinc salt of a copolymer of ethene and methacrylic acid, containing 9% of methacrylic acid and being 18% neutralized with zinc, and a sufficient amount of various metal salts to provide a molar ratio of metal to zinc of 3:1. The components were tumbled overnight and extruded in an extruder operating at 275 °C in air. Compositions produced in this manner, i.e. M, and the metal salt each contains, are described in Table 3.

Comparative experiment A

The procedure of Example III was repeated employing only the partially zinc-neutralized acidic polymer (PZNP), as well with combinations of the Polyketone II, the partially neutralized acid polymer and a number of metal salts which are outside the scope of the invention:

$Sn(O_2CC_2H_5)_4$ (composition x)

$Si(O_2CCH_3)_4$ (composition Y)
$Ba(O_2CCH_3)_2$ (composition Z)

Example IV

Determination of melt stability

The melt stability of the compositions as prepared in Examples I-III was determined by measuring the melting points and crystallization temperatures, or alternatively the heats of melting and heats of fusion, employing a differential scanning calorimeter (DSC) following the procedure as described hereinafter. A sealed pan container, containing an appropriate size sample, is heated at a controlled rate, typically 20 °C/minute, until reaching the temperature at which the sample has melted, $T_m1$. The pan and contents are then cooled to the temperature at which the sample has solidified, $T_c1$, and then heated past a second melting point, $T_m2$, to 285 °C at which temperature the sample is maintained for 10 minutes. The pan and contents are then cooled until the sample has again solidified, $T_c2$. The melting and crystallization temperatures are defined as the temperatures at which the heat flow reaches a maximum (for melting) or a minimum (for crystallization). Typically, the melting point $T_m$ will be higher than the crystallization temperature and each will decrease somewhat with repeated melting/solidification cycles. Although a number of factors may influence the melting point and crystallization temperatures, these values are at least influenced by the crystallinity of the polymer. In general, the smaller the difference between the first and second melting points, or the first and second crystallization temperatures, the greater the degree of retained apparent crystallinity.

It is also possible through the use of the DSC to determine the magnitude of the first and second heats of melting ($H_1$ and $H_2$) in cal/g and the first and second heats of crystallization ($C_1$ and $C_2$), also in cal/g, for the polymer and compositions. In general, the heats of crystallization will be higher for the stabilized compositions than for the unstabilized polymer. The higher the ratio $C_2/C_1$ is, the higher the retained apparent crystallinity.

The results of the melt stability measurements of the polymer compositions as prepared in Examples I, II and III as well as those of the next polymers have been collected in Tables 1, 2 and 3 respectively, whereas the results of the comparative experiment have been included in Table 3.

TABLE 1

| Sample | %wt Zinc Aluminate, Al:Zn ratio | $T_c2$ (°C) | $C_2/C_1$ |
|---|---|---|---|
| Polyketone I (average of 3 exp.) | 0 | 158.1 | 0.76 |
| Composition A(C) | 0.3%, 3:1 | 170.2 | 0.90 |
| Composition A(D) | 0.3%, 1.3:1 | 170.2 | 0.91 |
| A(C) | 0.3%, 1.3:1 | 165.5 | 0.87 |
| Composition A(D) | 0.3%, 1.4:1 | 163.4 | 0.83 |
| A(C) | 0.3%, 1.4:1 | 164.4 | 0.86 |
| Composition B(D) | 0.3%, 1:1 | 158.8 | 0.76 |
| Composition B(D) | 0.3%, 3:1 | 167.7 | 0.87 |
| B(D) | 0.3%, 3:1 | 162.2 | 0.81 |

TABLE 2

| Sample | $T_c2$ | $C_2/C_1$ |
|---|---|---|
| Composition G | 163.3 | 0.83 |
| Composition H | 163.7 | 0.85 |

TABLE 3

| Sample | Metal Salt | $T_c2$ | $C_2/C_1$ | $H_2/H_1$ |
|---|---|---|---|---|
| Polyketone II | - | 164.1 | 0.83 | 0.95 |
| Composition J | $AlOH(O_2CCH_3)_2$ | 166.9 | 0.88 | 1.10 |
| Composition K | $Mg(O_2CC_2H_5)_2$ | 167.9 | 0.89 | 1.13 |
| Composition L | $Mg(O_2CC_6H_5)_2$ | 167.3 | 0.93 | 1.08 |
| Composition M | $Sc(O_2CCH_3)_3$ | 165.2 | 0.88 | 1.04 |
| Comparative experiments | | | | |
| Terpolymer + PZNP | - | 167.1 | 0.88 | 1.04 |
| Composition X | $Sn(O_2CC_2H_5)_4$ | 158.2 | 0.82 | 1.11 |
| Composition Y | $Si(O_2CCH_3)_4$ | 162.5 | 0.84 | 1.07 |
| Composition Z | $Ba(O_2CCH_3)_2$ | 159.8 | 0.81 | 0.91 |

## Claims

1. A stabilized polymer composition comprising a linear alternating polymer of carbon monoxide and at least one ethylenically unsaturated compound, and a stabilizing quantity of at least a zinc compound, selected from the group of zinc compounds consisting of
   a) a zinc aluminate, and optionally an acidic polymer containing moieties of an α-olefin and an α,β-ethylenically unsaturated carboxylic acid,
   b) the reaction product of an oxy-bridged zinc-aluminium or zinc-titanium compound and an acidic polymer containing moieties of an α-olefin and an α,β-ethylenically unsaturated carboxylic acid, and
   c) a partially zinc-neutralized acidic polymer containing moieties of an α-olefin and an α,β-ethylenically unsaturated carboxylic acid and salt of aluminium, magnesium or scandium.

2. The composition as claimed in claim 1, wherein the linear alternating polymer is represented by the repeating formula

$$-[CO-(CH_2-CH_2)]_x-[CO-(G)]_y-$$

   wherein G is the moiety of an ethylenically unsaturated hydrocarbon of at least 3 carbon atoms polymerized through the ethylenic unsaturation thereof and the ratio of y:x is no more than 0.5.

3. The composition as claimed in claim 1 or 2, wherein the atomic ratio of aluminium:zinc in the zinc aluminate is in the range of from 0.5:1 to 9:1, and preferably from 2:1 to 5:1.

4. The composition as claimed in claim 1 or 2, wherein the oxy-bridged zinc-aluminium compound is of the formula

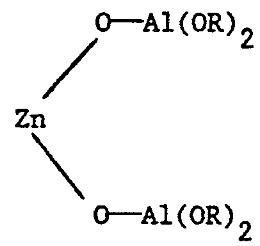

wherein R independently is alkyl of up to 10 carbon atoms inclusive.

5. The composition as claimed in any one of claims 1-3, wherein the zinc aluminate is present in a quantity in the range of from 0.01% by weight to 5% by weight, based on total composition, and preferably in the range of from 0.05-2% by weight.

6. The composition as claimed in any one of claims 1-3 and 5, wherein the optional acidic polymer is present in a quantity of up to 5% by weight, based on total composition, and preferably in the range of from 0.05-3% by weight.

7. The composition as claimed in any one of claims 1-6, wherein the acidic polymer is a copolymer of ethene and methacrylic acid or acrylic acid.

8. The composition as claimed in any one of claims 1, 2, 4 and 7, wherein the reaction product is based on a reaction mixture comprising a quantity of the oxy-bridged compound in the range of from 10% by weight to 80% by weight on total reaction mixture.

9. The composition as claimed in any one of claims 1, 2, 4, 7 and 8, wherein the reaction product is present in an amount of from 0.05% by weight to 10% by weight based on total composition.

10. The composition as claimed in any one of claims 4, 7, 8 and 9, wherein R is isopropyl.

11. The composition as claimed in any one of claims 1, 2 and 7, wherein the metal salt of aluminium, magnesium or scandium is a carboxylate.

12. The composition as claimed in any one of claims 1, 2, 7 and 11, wherein the partially neutralized acidic polymer contains at least 80% mol ethene and is neutralized in a range of from 5% to 80% with zinc.

13. The composition as claimed in any one of claims 1, 2, 7, 11 and 12, wherein the partially neutralized acidic polymer is present in an amount in the range of from 0.05% by weight to 5% by weight based on total composition.

14. The composition as claimed in any one of claims 11-13, wherein the metal carboxylate is present in a quantity sufficient to provide a molar ratio of metal:zinc in the range of from 1:1 to 10:1.

15. The composition as claimed in any one of claims 11-14, wherein the metal carboxylate is a metal alkanoate.

European Patent Office

# EUROPEAN SEARCH REPORT

Application Number

EP 91 20 0152

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 310 166 (SHELL INTERNATIONALE RESEARCH MAATSCHAPPIJ B.V.)<br>* claims *<br>- - - | 1 | C 08 K 3/24<br>C 08 K 5/09<br>C 08 L 73/00 //<br>(C 08 L<br>73/00<br>C 08 L<br>C 08 L 33:02 ) |
| D,P,X | EP-A-0 393 753 (SHELL INTERNATIONALE RESEARCH MAATSCHAPPIJ B.V.)<br>* page 4, lines 8 - 21; claims *<br>- - - - - | 1 | |
| | | | TECHNICAL FIELDS SEARCHED (Int. Cl.5) |
| | | | C 08 K<br>C 08 L |

The present search report has been drawn up for all claims

| Place of search | Date of completion of search | Examiner |
|---|---|---|
| The Hague | 08 May 91 | DE LOS ARCOS Y VELAZ |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document